# EUROPEAN PATENT APPLICATION

(11) **EP 4 434 831 A1**
(43) Date of publication of application: **25.09.2024**
(21) Application number: 24162656.3
(22) Date of filing: 11.03.2024
(51) Int. Cl.: B60T 13/74, F16D 65/16, F16D 28/00, F16D 41/066, F16D 125/40, F16D 125/06, F16D 127/02, F16D 127/06, F16D 121/26, F16D 129/10, F16D 125/66

(54) **ELECTRO-MECHANICAL BRAKING APPARATUS COMPRISING A LOCK APPARATUS**

(30) Priority: 23.03.2023 CN 202310320644
(71) Applicant: Huawei Digital Power Technologies Co., Ltd., Shenzhen, 518043 (CN)
(72) Inventor: HE, Yuhui, Shenzhen, 518043 (CN)
(74) Representative: Epping - Hermann - Fischer

(57) **Abstract**

The invention relates to an electro-mechanical braking apparatus (100). The electro-mechanical braking apparatus includes a braking motor (10) and a lock apparatus (20). One end of a motor shaft of the braking motor is configured to drive a brake, the brake being configured to brake a vehicle, and the lock apparatus is configured to lock the braking motor through the other end of the motor shaft of the braking motor. The lock apparatus includes a clutch (30), an axial moving member (40), and a driving motor (50). The clutch is sleeved on the other end of the motor shaft of the braking motor. The axial moving member is configured to: move along an axial direction of the braking motor relative to the clutch and control the clutch to lock or release the other end of the motor shaft of the braking motor. The driving motor is configured to drive the axial moving member to move away from or toward the clutch. The clutch can lock the braking motor during parking braking, and the braking motor does not need to stay in a working state for a long time. In this way, reliability of the electro-mechanical braking apparatus is improved, and safety of the vehicle is further improved.

## Description

### TECHNICAL FIELD

Embodiments of this application relate to the field of electro-mechanical braking technologies, and in particular, to an electro-mechanical braking apparatus and a vehicle.

### BACKGROUND

Electro-mechanical braking (Electro-Mechanical Braking, EMB) means that a motor is used to drive a mechanical structure to push a brake pad to clamp a brake disc, which can be used for driving braking and parking braking. When an existing electro-mechanical braking apparatus performs parking braking, a braking motor is required to continuously drive a mechanical structure to push a brake pad to clamp a brake disc. However, after running for a long time, the braking motor may be faulty or powered off, or another exception may occur. Consequently, the brake pad cannot clamp the brake disc, affecting safety of a vehicle during parking. Therefore, how to ensure reliability of an electro-mechanical braking system becomes an urgent problem to be resolved.

### SUMMARY

Embodiments of this application provide an electro-mechanical braking apparatus and a vehicle, so that a clutch locks a braking motor during parking braking, and the braking motor does not need to stay in a working state for a long time. In this way, reliability of the electro-mechanical braking apparatus is improved, and safety of the vehicle is further improved.

According to a first aspect of this application, an electro-mechanical braking apparatus is provided. The electro-mechanical braking apparatus includes a braking motor and a lock apparatus. One end of a motor shaft of the braking motor is configured to drive a brake. The brake is configured to brake a vehicle. The lock apparatus is configured to lock the braking motor through the other end of the motor shaft of the braking motor. The lock apparatus includes a clutch, an axial moving member, and a driving motor. The clutch is sleeved on the other end of the motor shaft of the braking motor. The axial moving member is configured to: move along an axial direction of the braking motor relative to the clutch and control the clutch to lock or release the other end of the motor shaft of the braking motor. The driving motor is configured to drive the axial moving member to move toward or away from the clutch.

According to the electro-mechanical braking apparatus provided in embodiments of this application, in a parking braking process, the braking motor first drives the brake to clamp a brake disc of the vehicle, and then the driving motor drives the axial moving member to move relative to the clutch, so that the clutch locks the motor shaft of the braking motor. In this way, parking braking of the vehicle is implemented.

According to the electro-mechanical braking apparatus provided in embodiments of this application, after the motor shaft of the braking motor is locked by using a self-lock force output by a mechanical structure of the clutch, the braking motor and the driving motor may be switched to a power-off state, and the braking motor and the driving motor do not need to run for a long time. This reduces possibility of an exception occurring in the electro-mechanical braking apparatus, improves reliability of the electro-mechanical braking apparatus, and improves safety of the vehicle.

In addition, according to the electro-mechanical braking apparatus provided in embodiments of this application, the axial moving member moves along the axial direction of the braking motor relative to the clutch, to control the clutch to lock or release the other end of the motor shaft of the braking motor. This can reduce a quantity of parts of the electro-mechanical braking apparatus to improve reliability of the electro-mechanical braking apparatus, and can shorten a mechanical transmission distance to reduce an overall size of the electro-mechanical braking apparatus. In this way, space required for installing the electro-mechanical braking apparatus in the vehicle is reduced, and this facilitates widespread application of the electro-mechanical braking apparatus.

In an implementation, the clutch in the electro-mechanical braking apparatus provided in embodiments of this application includes an inner wheel, an outer wheel, and a movable member. The outer wheel and the inner wheel are sequentially spaced around the other end of the motor shaft of the braking motor, the inner wheel is configured to be fastened to the other end of the motor shaft of the braking motor, an inner circumferential surface of the outer wheel includes a groove, an opening of the groove faces an outer circumferential surface of the inner wheel, and a groove depth of the groove gradually decreases along a circumferential direction of the braking motor. The movable member is configured to move in the groove along the circumferential direction of the braking motor.

According to the electro-mechanical braking apparatus provided in embodiments of this application, the movable member of the clutch moves, along the circumferential direction of the braking motor, between an area with a small groove depth and an area with a large groove depth in the groove, so that the clutch locks or releases the other end of the motor shaft of the braking motor. When the movable member moves to the area with the small groove depth, a groove bottom of the groove and the outer circumferential surface of the inner wheel simultaneously press against the movable member along a radial direction of the braking motor. In this case, the inner wheel cannot rotate relative to the outer wheel, and then the clutch locks the other end of the motor shaft of the braking motor. When the movable member moves to the area with the large groove depth, the movable member may move relative to a groove bottom of the groove and the outer circumferential surface of the inner wheel. In this case, the inner wheel can rotate relative to the outer wheel, and then the clutch releases the other end of the motor shaft of the braking motor.

Correspondingly, according to the electro-mechanical braking apparatus provided in embodiments of this application, the movable member of the clutch moves along the circumferential direction of the braking motor, to limit or allow relative rotation of the outer wheel and the inner wheel. This can reduce a quantity of parts of the electro-mechanical braking apparatus to improve reliability of the electro-mechanical braking apparatus, and reduce a size of the electro-mechanical braking apparatus along the radial direction of the braking motor.

In an implementation, in the electro-mechanical braking apparatus provided in embodiments of this application, the clutch includes three movable members, the outer wheel includes three grooves, and each groove is configured to accommodate one of the movable members. The three grooves are equally spaced and are disposed along the circumferential direction of the braking motor. A minimum groove depth end of one of two adj acent grooves is close to a maximum groove depth end of the other groove along the circumferential direction of the braking motor.

In the electro-mechanical braking apparatus provided in embodiments of this application, the inner wheel and the outer wheel of the clutch cooperate with each other through three movable members. In this way, the inner wheel can bear a balanced force, and an external force borne by a single movable member can be reduced. This can improve a service life of the movable member. In addition, the minimum groove depth end of one groove is close to the maximum groove depth end of the other groove, to ensure that the three movable members move in a direction the same as the circumferential direction of the braking motor, and then ensure that the clutch locks or releases the other end of the motor shaft of the braking motor.

In an implementation, in the electro-mechanical braking apparatus provided in embodiments of this application, a minimum groove depth of each groove in the outer wheel of the clutch is greater than a length of the movable member along the radial direction of the braking motor, and a maximum groove depth of each groove is greater than the length of the movable member along the radial direction of the braking motor.

In the electro-mechanical braking apparatus provided in embodiments of this application, a groove bottom of the outer wheel of the clutch is a curved surface. This helps reduce a length of the groove, so that an area in which the outer wheel needs to be grooved can be reduced, and then structural strength of the outer wheel can be improved. In addition, the groove bottom of the outer wheel is the curved surface, so that the movable member can smoothly move in the groove. In addition, the length of the movable member along the radial direction of the braking motor is less than the maximum groove depth of the groove and greater than the minimum groove depth of the groove. In this way, the movable member can limit relative rotation of the outer wheel and the inner wheel when moving to an area with a small groove depth, and allow relative rotation of the outer wheel and the inner wheel when moving to an area with a large groove depth, so that the clutch locks or releases the motor shaft of the braking motor.

In an implementation, in the clutch in the electro-mechanical braking apparatus provided in embodiments of this application, an end face that is of the outer wheel and that faces the driving motor includes a cooperation opening, the cooperation opening communicates with the groove along an axial direction of the outer wheel, and the axial moving member passes through the cooperation opening to drive the movable member.

In the clutch in the electro-mechanical braking apparatus provided in embodiments of this application, the cooperation opening is disposed on an end face that is of the outer wheel and that faces the driving motor, so that when moving along the axial direction of the braking motor, the axial moving member may drive the movable member to move along the axial direction of the braking motor, to limit or allow relative rotation of the outer wheel and the inner wheel, and then the clutch locks or releases the motor shaft of the braking motor.

In an implementation, the clutch in the electro-mechanical braking apparatus provided in embodiments of this application includes an elastic member. The elastic member is configured to cooperate with the axial moving member to drive the movable member to move back and forth along the circumferential direction of the clutch. The axial moving member moves toward the clutch and drives the movable member to move clockwise along the circumferential direction of the clutch, and when the axial moving member moves away from the clutch, the elastic member is configured to drive the movable member to move counterclockwise along the circumferential direction of the clutch; or the axial moving member moves toward the clutch and drives the movable member to move counterclockwise along the circumferential direction of the clutch, and when the axial moving member moves away from the clutch, the elastic member is configured to drive the movable member to move clockwise along the circumferential direction of the clutch.

In the clutch in the electro-mechanical braking apparatus clutch provided in embodiments of this application, when the axial moving member moves away from the clutch, the elastic member drives the movable member to reset. In this way, the movable member moves back and forth along the axial direction of the braking motor, to limit or allow relative rotation of the outer wheel and the inner wheel. Specifically, when the axial moving member moves away from the clutch, the elastic member drives the movable member to move toward the minimum groove depth end of the groove. In this way, the movable member limits relative rotation of the outer wheel and the inner wheel, and correspondingly, the clutch locks the motor shaft of the braking motor. When the axial moving member moves toward the clutch, the elastic member may drive the movable member to overcome an elastic force output by the elastic member and move to the area with the large groove depth. Correspondingly, the movable member does not simultaneously press against the groove bottom and the outer circumferential surface of the inner wheel, so that the inner wheel and the outer wheel can rotate relative to each other, and then the clutch releases the motor shaft of the braking motor. Alternatively, when the axial moving member moves toward the clutch, the elastic member drives the movable member to overcome an elastic force output by the elastic member and move to the area with the small groove depth. In this way, the movable member limits relative rotation of the outer wheel and the inner wheel, and correspondingly, the clutch locks the motor shaft of the braking motor. When the axial moving member moves away from the clutch, the elastic member drives the movable member to move to the area with the large groove depth. Correspondingly, the movable member does not simultaneously press against the groove bottom and the outer circumferential surface of the inner wheel, so that the inner wheel and the outer wheel can rotate relative to each other, and then the clutch releases the motor shaft of the braking motor. In the clutch in the electro-mechanical braking apparatus provided in embodiments of this application, the axial moving member cooperates with the elastic member, so that the movable member moves back and forth in the groove along the circumferential direction of the braking motor, to limit or allow relative rotation of the inner wheel and the outer wheel of the clutch, and then the clutch releases or locks the motor shaft of the braking motor. Correspondingly, according to the electro-mechanical braking apparatus provided in embodiments of this application, a quantity of parts required for parking braking can be reduced, and running time of the braking motor and the driving motor can be reduced, so that reliability of the electro-mechanical braking apparatus is improved.

In an implementation, the axial moving member of the electro-mechanical braking apparatus provided in embodiments of this application includes a transmission part and a push part. The transmission part is configured to: be in transmission connection with a motor shaft of the driving motor, and move along an axial direction of the driving motor with rotation of the motor shaft of the driving motor. The push part is configured to: receive a driving force of the push part, move along the axial direction of the driving motor, and drive the movable member.

The axial moving member of the electro-mechanical braking apparatus provided in embodiments of this application can convert a rotation motion of the motor shaft of the driving motor into an axial motion along the axial direction of the driving motor, to drive the movable member to move along the circumferential direction of the clutch. This reduces a quantity of parts required by the electro-mechanical braking apparatus for implementing parking braking, and simplifies a mechanical transmission path, to help miniaturize the electro-mechanical braking apparatus. In addition, the axial moving member of the electro-mechanical braking apparatus provided in embodiments of this application can convert the rotation motion into the axial motion, to implement axial arrangement of the braking motor, the clutch, and the driving motor. This avoids that apparatuses related to a parking braking function and the electro-mechanical braking apparatus are arranged in parallel, and the apparatuses related to the parking braking function can be flexibly arranged on left and right sides of the vehicle without a foolproof design. In addition, in the electro-mechanical braking apparatus provided in embodiments of this application, the braking motor, the clutch, and the driving motor are axially arranged. This can reduce a size of the electro-mechanical braking apparatus along the radial direction of the braking motor, to help miniaturization of the electro-mechanical braking apparatus.

In an implementation, in the axial moving member of the electro-mechanical braking apparatus provided in embodiments of this application, one end that is of the push part and that faces the outer wheel includes a cooperation slope, and a tilt direction of the cooperation slope intersects the axial direction of the driving motor.

In the axial moving member of the electro-mechanical braking apparatus provided in embodiments of this application, the push part of the push part is in contact with an outer circumferential surface of the movable member through the cooperation slope. A distance at which the movable member moves along the circumferential direction of the braking motor can be controlled by controlling a distance at which the push part moves along the axial direction of the braking motor. In addition, the push part is in contact with the outer circumferential surface of the movable member through the cooperation slope, so that the push part cannot impact the movable member. In addition, the push part can drive the movable member to move along the circumferential direction of the braking motor more smoothly, to reduce impact of the movable member on the inner wheel and/or the outer wheel.

In an implementation, the outer wheel includes a clutch positioning part, the braking motor includes a clutch positioning groove, the clutch positioning part is a protrusion structure that is of the outer wheel and that faces the braking motor along the axial direction of the braking motor, the clutch positioning groove is a groove structure that is of the braking motor and that is away from the outer wheel along the axial direction of the braking motor, and the clutch positioning part cooperates with the clutch positioning groove to fasten relative locations of the outer wheel and the braking motor; or the outer wheel includes a clutch positioning groove, the braking motor includes a clutch positioning part, the clutch positioning groove is a groove structure that is of the outer wheel and that is away from the braking motor along the axial direction of the braking motor, the clutch positioning part is a protrusion structure that is of the braking motor and that faces the outer wheel along the axial direction of the braking motor, and the clutch positioning part cooperates with the clutch positioning groove to fasten relative locations of the outer wheel and the braking motor.

In the clutch in the electro-mechanical braking apparatus clutch provided in embodiments of this application, the outer wheel is fastened to a housing of the braking motor, so that it can be ensured that the clutch and the braking motor are coaxially disposed, and then the clutch can lock or release the other end of the motor shaft of the braking motor. In addition, utilization of the housing of the braking motor can be further improved. The housing of the braking motor is used as a positioning reference of the clutch, to reduce difficulty of disposing the clutch and the braking motor coaxially. In an implementation, the lock apparatus includes a housing member, where the housing member is configured to: be fastened to the braking motor, and accommodate the clutch, the axial moving member, and the driving motor. The housing member includes a connection opening. The connection opening is configured to communicate the inside of the housing member with the outside of the housing member, the connection opening faces the braking motor, the inner wheel is fastened to the other end of the motor shaft of the braking motor through the connection opening, and one end that is of the outer wheel and that faces the braking motor presses against the housing of the braking motor through the connection opening.

In the electro-mechanical braking apparatus provided in embodiments of this application, the housing member of the lock apparatus may press the outer wheel on the housing of the braking motor along the axial direction of the braking motor, so that the outer wheel is fastened to the housing of the braking motor. In addition, because the outer wheel uses the housing of the braking motor as the positioning reference, a precision requirement on the housing member can be reduced, provided that the housing member can play a pressing role.

In an implementation, the lock apparatus includes a ring fastening member. The ring fastening member is disposed inside the housing member and arranged between the clutch and the driving motor, the ring fastening member is fastened to the outer wheel through a positioning member, and the positioning member includes a positioning ring and a positioning groove. An end face that is of the ring fastening member and that faces the outer wheel includes the positioning ring, and an end face that is of the outer wheel and that faces the ring fastening member includes the positioning groove; or an end face that is of the ring fastening member and that faces the outer wheel includes the positioning groove, and an end face that is of the outer wheel and that faces the ring fastening member includes the positioning ring.

In the lock apparatus in the electro-mechanical braking apparatus provided in embodiments of this application, the ring fastening member, the housing member, and the positioning member cooperate with each other, the housing member can press the driving motor and the outer wheel on the housing of the braking motor, and the housing of the braking motor can be used as the positioning reference, to ensure that the driving motor, the clutch, and the braking motor are coaxially disposed.

In an implementation, the axial moving member is in transmission connection with the motor shaft of the driving motor through a transmission member, and the transmission member is configured to: move with rotation of the motor shaft of the driving motor and drive the axial moving member to move along the axial direction of the braking motor.

In an implementation, the transmission member includes a transmission screw and a threaded hole. The threaded hole penetrates through the transmission part of the axial moving member along the axial direction of the braking motor, the transmission screw is sleeved on the motor shaft of the driving motor and is fastened to the motor shaft of the driving motor, the axial moving member is sleeved on the transmission screw through the threaded hole, and an external thread of the transmission screw is engaged with an internal thread of the threaded hole. In the electro-mechanical braking apparatus provided in embodiments of this application, the transmission screw and the threaded hole are used for transmission, so that a force transfer chain between the driving motor and the axial moving member can be shortened, and then a structure of the electro-mechanical braking apparatus can be simplified. This helps improve reliability of the electro-mechanical braking apparatus.

In an implementation, along the axial direction of the braking motor, the axial moving member is arranged between the clutch and the driving motor, and axes of the braking motor, the axial moving members, the clutch, and the driving motor coincide. Components in the electro-mechanical braking apparatus provided in embodiments of this application are sequentially and coaxially arranged, to ensure appearance and structure consistency of the electro-mechanical braking apparatus. Compared with an existing electro-mechanical braking apparatus, a symmetric component required for arranging a left side or a right side of a vehicle can be avoided. In this way, a quantity of components in the electro-mechanical braking apparatus can be reduced, an assembly foolproof design can be omitted, and a size of a coaxial moving member along an axial direction of a braking motor can be reduced.

According to a second aspect of this application, a vehicle is provided. The vehicle includes a wheel and the electro-mechanical braking apparatus according to any one of the first aspect. The electro-mechanical braking apparatus is configured to brake the wheel. According to the vehicle provided in embodiments of this application, the electro-mechanical braking apparatus can lock a motor shaft of a braking motor to perform parking braking on the vehicle, so that the braking motor does not need to stay in a working state for a long time, to improve safety of the vehicle.

### BRIEF DESCRIPTION OF DRAWINGS

FIG. 1 is a schematic diagram of a structure of a vehicle according to an embodiment of this application;
FIG. 2 is a schematic diagram of an electro-mechanical braking apparatus according to an embodiment of this application;
FIG. 3 is another schematic diagram of an electro-mechanical braking apparatus according to an embodiment of this application;
FIG. 4 is a sectional view of an electro-mechanical braking apparatus shown in FIG. 3;
FIG. 5 is a partial enlarged view of a location B in an electro-mechanical braking apparatus shown in FIG. 4;
FIG. 6 is another schematic diagram of a lock apparatus in an electro-mechanical braking apparatus according to an embodiment of this application;
FIG. 7 is a left view of a lock apparatus according to an embodiment of this application;
FIG. 8 is a sectional view at B-B in FIG. 7;
FIG. 9 is a schematic diagram of a clutch in an electro-mechanical braking apparatus according to an embodiment of this application;
FIG. 10 is a schematic diagram of an axial moving member of a clutch in an electro-mechanical braking apparatus according to an embodiment of this application;
FIG. 11 is a schematic diagram of an axial moving member of a clutch in an electro-mechanical braking apparatus according to an embodiment of this application;
FIG. 12 is another schematic diagram of a lock apparatus in an electro-mechanical braking apparatus according to an embodiment of this application;
FIG. 13 is a schematic diagram of a ring fastening member of a lock apparatus in an electro-mechanical braking apparatus according to an embodiment of this application;
FIG. 14 is another schematic diagram of a ring fastening member of a lock apparatus in an electro-mechanical braking apparatus according to an embodiment of this application.

### Descriptions of reference numerals:

100: electro-mechanical braking apparatus;
10: braking motor; 11: clutch positioning groove;
20: lock apparatus;
30: clutch;
31: inner wheel;
32: outer wheel; 321: groove; 322: cooperation opening; 323: clutch positioning part;
33: movable member;
34: elastic member;
40: axial moving member;
41: transmission part; 411: large ring part; 412: small ring part;
42: push part; 421: cooperation slope;
50: driving motor; 51: motor positioning part;
60: housing member; 61: connection opening; 62: fastening part; 63: housing part; 64: step;
70: positioning member; 71: positioning ring; 72: positioning groove;
80: ring fastening member; 81: fastening main part; 82: fastening connection part; 83: motor positioning groove;
90: transmission member; 91: transmission screw; 92: threaded hole;
110: brake;
200: reducer;
300: wheel;
400: brake disc; and
500: vehicle.

### DESCRIPTION OF EMBODIMENTS

An electro-mechanical braking apparatus usually includes a brake and a braking motor. The brake is in transmission connection with a motor shaft of the braking motor. The braking motor is configured to drive the brake to clamp or release a brake disc. During driving braking, the braking motor in the electro-mechanical braking apparatus drives the brake to clamp the brake disc to brake a vehicle. During parking braking, the braking motor in the electro-mechanical braking apparatus needs to stay in a working state to drive the brake to clamp the vehicle. In other words, the braking motor stays in a power-on state.

However, the braking motor is prone to heat and may be damaged after being powered on for a long-time. If the vehicle is parked on a slope and is in a parking state, after being damaged, the braking motor cannot drive the brake to drive the brake pad to clamp the brake disc. As a result, the vehicle will slip, affecting safety of the vehicle during parking.

In view of this, embodiments of this application provide an electro-mechanical braking apparatus 100 and a vehicle 500 in which the electro-mechanical braking apparatus 100 is used, to reduce possibility of an exception occurring in the electro-mechanical braking apparatus 100, and improve safety of the vehicle 500.

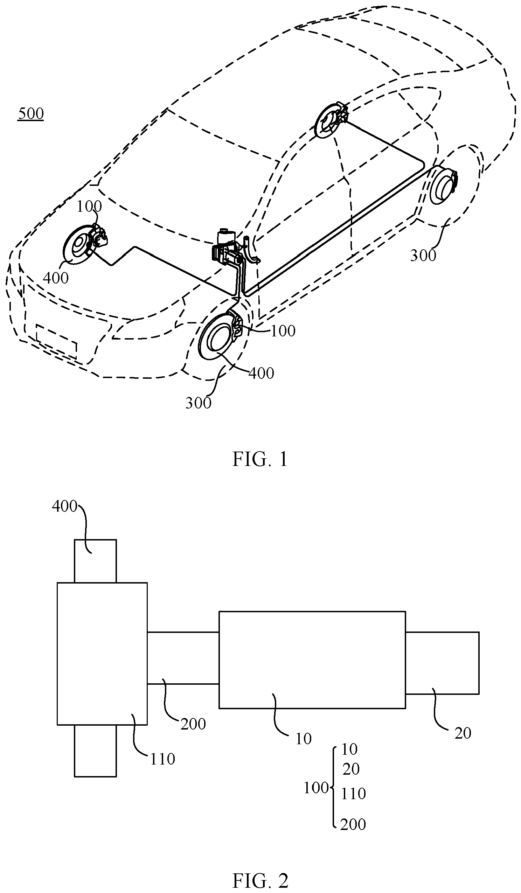

FIG. 1 is a schematic diagram of a structure of a vehicle according to an embodiment of this application. As shown in FIG. 1, the vehicle 500 provided in embodiments of this application may include an electro-mechanical braking apparatus 100, a wheel 300, and a brake disc 400. The electro-mechanical braking apparatus 100 is fastened to a vehicle body of the vehicle 500, and the electro-mechanical braking apparatus 100 brakes the wheel 300 through the brake disc 400, to implement driving braking or parking braking on the vehicle 500.

In embodiments of this application, the vehicle 500 may be a two-wheeled vehicle, a three-wheeled vehicle, or an electric vehicle (Electric Vehicle, EV), or may be a pure electric vehicle/battery electric vehicle (Pure Electric Vehicle/Battery Electric Vehicle, PEV/BEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), or a new energy vehicle (New Energy Vehicle, NEV).

In embodiments of this application, the wheel 300 includes at least one of a front wheel or a rear wheel of the vehicle 500. The front wheel includes a left front wheel and a right front wheel, and the rear wheel includes a right rear wheel and a left rear wheel. In an embodiment, one electronic mechanical braking apparatus 100 may be configured to brake the front wheel or the rear wheel of the vehicle 500. Correspondingly, the vehicle 500 includes one or two electro-mechanical braking apparatuses 100. In an embodiment, one electro-mechanical braking apparatus 100 may be configured to brake one of the left front wheel, the right front wheel, the right rear wheel, and the left rear wheel of the vehicle 500. Correspondingly, the vehicle 500 may include two or four electro-mechanical braking apparatuses 100.

According to the vehicle 500 provided in embodiments of this application, the electro-mechanical braking apparatus 100 can lock a motor shaft of a braking motor to perform parking braking on the vehicle 500, so that the braking motor 10 does not need to stay in a working state for a long time. This can reduce possibility of an exception occurring in the electro-mechanical braking apparatus 100, and improve safety of the vehicle 500.

With reference to accompanying drawings, the following describes the electro-mechanical braking apparatus 100 provided in embodiments of this application.

FIG. 2 is a schematic diagram of an electro-mechanical braking apparatus according to an embodiment of this application. In this embodiment of this application, the electro-mechanical braking apparatus 100 includes a braking motor 10 and a lock apparatus 20. As shown in FIG. 2, one end of a motor shaft of the braking motor 10 is configured to drive a brake 110. The brake 110 is configured to brake the vehicle 500. The lock apparatus 20 is configured to lock the braking motor 10 through the other end of the motor shaft of the braking motor 10.

In an embodiment, the electro-mechanical braking apparatus 100 provided in embodiments of this application further includes a reducer 200. As shown in FIG. 2, the braking motor 10 drives, through the reducer 200, the brake 110 to clamp a brake disc 400 to brake the vehicle 500, or releases the brake disc 400 to release braking on the vehicle 500.

In an embodiment, the electro-mechanical braking apparatus 100 includes a braking motor 10, a lock apparatus 20, and a brake 110. In an embodiment, the brake 110 includes a reducer 200. The brake 110 is in transmission connection with the braking motor 10 in the electro-mechanical braking apparatus 100 through the reducer 200.

In the electro-mechanical braking apparatus 100 provided in embodiments of this application, running directions of the braking motor 10 are classified into a counterclockwise direction and a clockwise direction. In an embodiment, if the electro-mechanical braking apparatus 100 starts parking braking or driving braking, the braking motor 10 runs in the clockwise direction; or if the electro-mechanical braking apparatus 100 cancels parking braking or driving braking, the braking motor 10 runs in the counterclockwise direction. In an embodiment, if the electro-mechanical braking apparatus 100 starts parking braking or driving braking, the braking motor 10 runs in the counterclockwise direction; or if the electro-mechanical braking apparatus 100 cancels parking braking or driving braking, the braking motor 10 runs in the clockwise direction.

For example, when the electro-mechanical braking apparatus 100 performs driving braking on the vehicle 500, the braking motor 10 runs and drives the brake 110 to clamp the brake disc 400. In this way, the wheel 300 cannot rotate, and then driving braking is implemented.

For example, when the electro-mechanical braking apparatus 100 performs parking braking on the vehicle 500, the braking motor 10 runs and drives the brake 110 to clamp the brake disc 400. In this way, the wheel 300 cannot rotate, and then the lock apparatus 20 locks the other end of the motor shaft of the braking motor 10. After the braking motor 10 is locked by the lock apparatus 20, the brake 110 may always clamp the brake disc 400 of the vehicle 500, to implement parking braking. Correspondingly, in a process in which the electro-mechanical braking apparatus 100 performs parking braking on the vehicle 500, the braking motor 10 may be powered off, and does not need to stay in a working state for a long time.

For example, when the electro-mechanical braking apparatus 100 cancels parking braking, the lock apparatus 20 releases the other end of the motor shaft of the braking motor 10, to cancel a parking braking state of the vehicle 500. After the lock apparatus 20 releases the braking motor 10, the braking motor 10 may run in the clockwise direction or run in the counterclockwise direction. Specifically, after the lock apparatus 20 releases the braking motor 10, the braking motor 10 runs and drives the brake 110 to clamp the brake disc 400 of the vehicle 500. In this way, the wheel 300 cannot rotate, to maintain a driving braking state of the vehicle. Alternatively, after the lock apparatus 20 releases the braking motor 10, the braking motor 10 runs in the reverse direction and drives the brake 110 to release the brake disc 400 of the vehicle 500. In this way, the wheel of the vehicle 500 can move, to release a driving braking state of the vehicle.

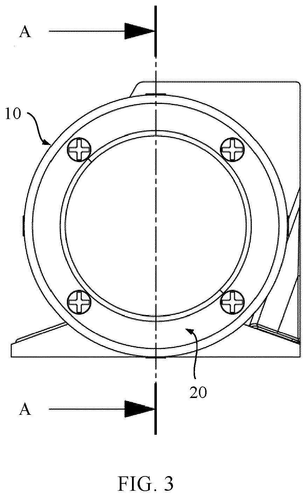

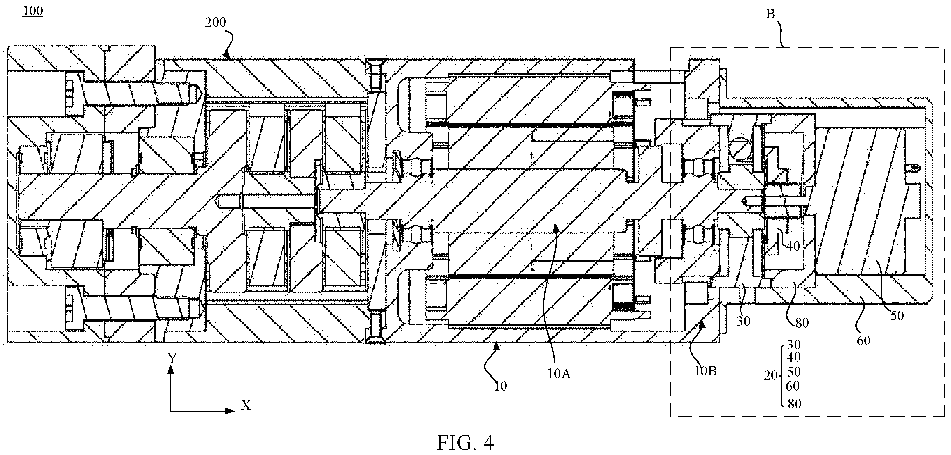

FIG. 3 is another schematic diagram of an electro-mechanical braking apparatus according to an embodiment of this application. FIG. 4 is a sectional view of the electro-mechanical braking apparatus shown in FIG. 3 along A-A. With reference to FIG. 2, FIG. 3, and FIG. 4, the braking motor 10 and the lock apparatus 20 in the electro-mechanical braking apparatus 100 are adjacently arranged along an axial direction of the braking motor 10. In an embodiment, in the electro-mechanical braking apparatus 100, an axis of the braking motor 10 coincides with that of the lock apparatus 20.

In this embodiment of this application, the lock apparatus 20 includes a clutch 30, an axial moving member 40, and a driving motor 50. The clutch 30 is sleeved on the other end of a motor shaft 10A of the braking motor 10. The axial moving member 40 is configured to: move along the axial direction of the braking motor 10 relative to the clutch 30 and control the clutch 30 to lock or release the other end of the motor shaft 10A of the braking motor 10. The driving motor 50 is configured to drive the axial moving member 40 to move away from or toward the clutch 30.

In an embodiment, the clutch 30 in the electro-mechanical braking apparatus 100 is a one way clutch.

In this embodiment of this application, the lock apparatus 20 locks the other end of the motor shaft of the braking motor 10, which is equivalent to that the clutch 30 locks the other end of the motor shaft of the braking motor 10. It may be understood that the clutch 30 may block or prevent the motor shaft of the braking motor 10 from rotating. In this embodiment of this application, the lock apparatus 20 releases the other end of the motor shaft of the braking motor 10, which is equivalent to that the clutch 30 releases the other end of the motor shaft of the braking motor 10. It may be understood that the clutch 30 does not block or prevent the motor shaft of the braking motor 10 from rotating.

As shown in FIG. 4, in the electro-mechanical braking apparatus 100 provided in embodiments of this application, the braking motor 10, the clutch 30, and the driving motor 50 are sequentially arranged along the axial direction of the braking motor 10. In an embodiment, an axis of the braking motor 10, an axis of the clutch 30, and an axis of the driving motor 50 coincide. Specifically, the braking motor 10, the clutch 30, and the driving motor 50 in the electro-mechanical braking apparatus 100 are coaxially disposed.

Correspondingly, in the electro-mechanical braking apparatus 100 provided in embodiments of this application, an apparatus related to a parking braking function and the braking motor 10 are coaxially arranged. Compared with that in the conventional technology in which a parking braking module and the braking motor 10 are arranged in parallel, this solution in this application is used to avoid a problem that a symmetric member is generated when the electro-mechanical braking apparatus 100 is arranged on a left or right side of the vehicle 500, and the electro-mechanical braking apparatus 100 can be flexibly arranged on the left or right side of the vehicle 500 without a foolproof design. In addition, in the electro-mechanical braking apparatus 100 provided in embodiments of this application, the braking motor 10, the clutch 30, and the driving motor 50 are sequentially arranged coaxially and adjacently. This can reduce a size of the electro-mechanical braking apparatus 100 along a radial direction of the braking motor 10, to help miniaturization of the electro-mechanical braking apparatus 100.

In this embodiment of this application, that the axial moving member 40 moves along the axial direction of the braking motor 10 relative to the clutch 30 may include: The axial moving member 40 moves toward the clutch 30 along the axial direction of the braking motor 10, and the axial moving member 40 moves away from the clutch 30 along the axial direction of the braking motor 10. In an embodiment, if the axial moving member 40 moves toward the clutch 30 along the axial direction of the braking motor 10, the clutch 30 is controlled to release the other end of the motor shaft of the braking motor 10; or if the axial moving member 40 moves away from the clutch 30 along the axial direction of the braking motor 10, the clutch 30 is controlled to lock the other end of the motor shaft of the braking motor 10. In an embodiment, if the axial moving member 40 moves toward the clutch 30 along the axial direction of the braking motor 10, the clutch 30 is controlled to lock the other end of the motor shaft of the braking motor 10; or if the axial moving member 40 moves away from the clutch 30 along the axial direction of the braking motor 10, the clutch 30 is controlled to release the other end of the motor shaft of the braking motor 10.

In the electro-mechanical braking apparatus 100 provided in embodiments of this application, running directions of the driving motor 50 are classified into a counterclockwise direction and a clockwise direction. In an embodiment, if the electro-mechanical braking apparatus 100 starts parking braking, the driving motor 50 runs in the clockwise direction; or if the electro-mechanical braking apparatus 100 cancels parking braking, the driving motor 50 runs in the counterclockwise direction. In an embodiment, if the electro-mechanical braking apparatus 100 starts parking braking, the driving motor 50 runs in the counterclockwise direction; or if the electro-mechanical braking apparatus 100 cancels parking braking, the driving motor 50 runs in the clockwise direction.

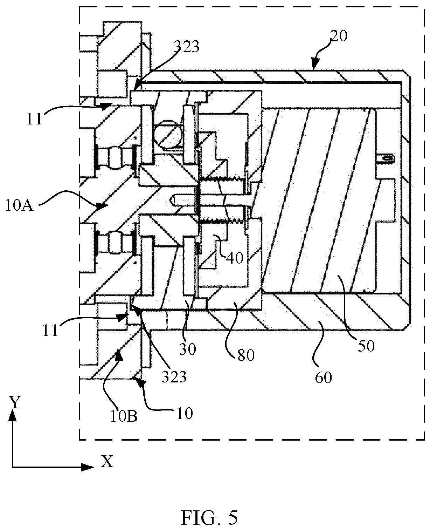

FIG. 5 is a partial enlarged view of a location B in the electro-mechanical braking apparatus shown in FIG. 4. As shown in FIG. 5, along the axial direction of the braking motor 10 (for example, an X direction in FIG. 4), the axial moving member 40 moves away from the clutch 30 until the axial moving member 40 is separated from the clutch 30, and the axial moving member 40 is located between the clutch 30 and the driving motor 50. The axial moving member 40 moves toward the clutch 30, one part of the axial moving member 40 is located inside the clutch 30, and the other part of the axial moving member 40 is located between the clutch 30 and the driving motor 50. Correspondingly, in the electro-mechanical braking apparatus 100 provided in embodiments of this application, the axial moving member 40 is disposed between the clutch 30 and the driving motor 50. This can shorten a moving distance required for the axial moving member 40 to move along the axial direction of the braking motor 10 and control the clutch 30 to lock or release the braking motor 10, and can reduce a size of the axial moving member 40 along the axial direction of the braking motor 10. In this way, a response speed of the electro-mechanical braking apparatus 100 can be improved, and a size of the electro-mechanical braking apparatus 100 along the axial direction of the braking motor 10 can be reduced.

For example, when the electro-mechanical braking apparatus 100 performs driving braking on the vehicle 500, the braking motor 10 runs and drives the brake 110 to clamp the brake disc 400. In this way, the wheel 300 cannot rotate, and then driving braking is implemented.

For example, when the electro-mechanical braking apparatus 100 performs parking braking on the vehicle 500, the braking motor 10 runs and drives the brake 110 to clamp the brake disc 400. In this way, the wheel 300 cannot rotate, and then the driving motor 50 runs and drives the axial moving member 40 to move along the axial direction of the braking motor 10 relative to the clutch 30, and the axial moving member 40 moving along the axial direction of the braking motor 10 controls the clutch 30 to lock the other end of the motor shaft of the braking motor 10. After the braking motor 10 is locked by the clutch 30, the brake 110 may always clamp the brake disc 400 of the vehicle 500, to implement parking braking. Correspondingly, both the driving motor 50 and the braking motor 10 may be powered off, and do not need to stay in a working state for a long time.

For example, when the electro-mechanical braking apparatus 100 cancels parking braking, the driving motor 50 runs in a reverse direction and drives the axial moving member 40 to move along the axial direction of the braking motor 10 relative to the clutch 30, and the axial moving member 40 moving along the axial direction of the braking motor 10 controls the clutch 30 to release the other end of the motor shaft of the braking motor 10, to cancel a parking braking state of the vehicle 500. After the clutch 30 releases the braking motor 10, the braking motor 10 may run or run in a reverse direction. Specifically, after the clutch 30 releases the braking motor 10, the braking motor 10 runs and drives the brake 110 to clamp the brake disc 400 of the vehicle 500. In this way, the wheel 300 cannot rotate, to maintain a driving braking state of the vehicle. Alternatively, after the clutch 30 releases the braking motor 10, the braking motor 10 runs in the reverse direction and drives the brake 110 to release the brake disc 400 of the vehicle 500. In this way, the wheel of the vehicle 500 can move, to release a driving braking state of the vehicle 500.

When the electro-mechanical braking apparatus 100 provided in embodiments of this application performs parking braking, after the brake 110 clamps the brake disc 400, the motor shaft of the braking motor 10 is locked by using a mechanical structure in which the axial moving member 40 cooperates with the clutch 30. In this way, the motor shaft of the braking motor 10 cannot rotate, and the brake 110 always clamps the brake disc 400. Therefore, when the electro-mechanical braking apparatus 100 provided in embodiments of this application performs parking braking, the braking motor 10 and the driving motor 50 do not need to stay in the working state for a long time. In other words, when the electro-mechanical braking apparatus 100 provided in embodiments of this application performs parking braking, the braking motor 10 and the driving motor 50 do not need to maintain a power-on state for a long time. This can reduce possibility of exceptions occurring the braking motor 10 and the driving motor 50, to improve reliability of the electro-mechanical braking apparatus 100, and further improve safety of the vehicle 500.

In addition, according to the electro-mechanical braking apparatus 100 provided in embodiments of this application, the axial moving member 40 moves along the axial direction of the braking motor 10 relative to the clutch 30 and controls the clutch 30 to lock or release the motor shaft of the braking motor 10, so that a mechanical transmission distance between the driving motor 50 and the clutch 30 is shortened. This can reduce a quantity of parts in the electro-mechanical braking apparatus 100 to improve reliability of the electro-mechanical braking apparatus 100, and can reduce a size of the electro-mechanical braking apparatus 100 along the radial direction of the braking motor 10 to help miniaturization of the electro-mechanical braking apparatus 100.

In an embodiment, the lock apparatus 20 includes the clutch 30, the axial moving member 40, the driving motor 50, and a housing member 60. The housing member 60 is configured to: be fastened to a housing of the braking motor 10 and accommodate the clutch 30, the axial moving member 40, and the driving motor 50. As shown in FIG. 4, along the axial direction of the braking motor 10, the clutch 30, the axial moving member 40, and the driving motor 50 are sequentially arranged inside the housing member 60.

In this embodiment of this application, the housing member 60 is fastened to the housing of the braking motor 10, and the clutch 30, the axial moving member 40, and the driving motor 50 are fastened to the housing member 60. An axis of the clutch 30 coincides with an axis of the braking motor 10, and an axis of the clutch 30, an axis of the axial moving member 40, and an axis of the driving motor 50 coincide. The housing member 60 is configured to fasten relative locations of the clutch 30, the axial moving member 40, and the driving motor 50, so that axes of the clutch 30, the axial moving member 40, and the driving motor 50 coincide, and is further configured to fasten relative locations of the lock apparatus 20 and the braking motor 10, so that the axis of the clutch 30 coincides with that of the braking motor 10.

According to the electro-mechanical braking apparatus 100 provided in embodiments of this application, the apparatus related to the parking braking function and the braking motor 10 are coaxially arranged. This can omit the foolproof design required for arranging the electro-mechanical braking apparatus 100 on the left or right side of the vehicle 500, and can reduce a size of the electro-mechanical braking apparatus 100 along the radial direction of the braking motor 10 to implement miniaturization.

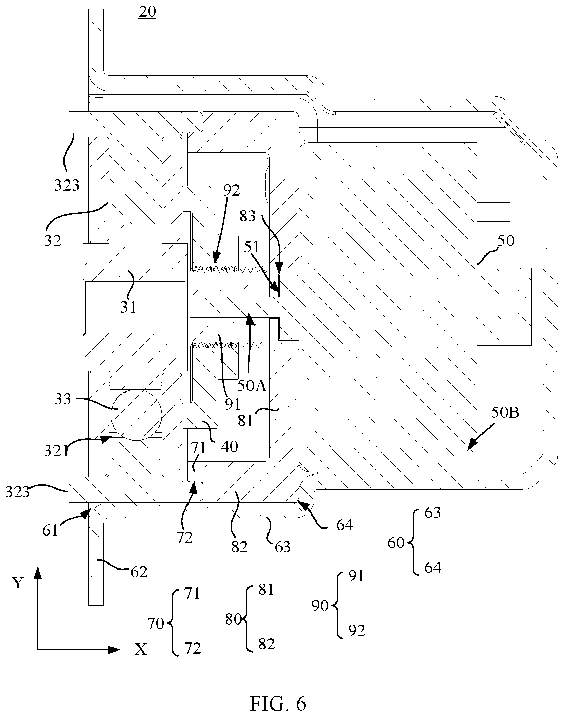

In an embodiment, the lock apparatus 20 includes the clutch 30, the axial moving member 40, the driving motor 50, and a ring fastening member 80. As shown in FIG. 4 and FIG. 6, the ring fastening member 80 is disposed inside the housing member 60. The ring fastening member 80 is arranged between the clutch 30 and the driving motor 50, and the ring fastening member 80 and the axial moving member 40 are sequentially arranged around a motor shaft of the driving motor 50. An end face that is of the ring fastening member 80 and that faces the clutch 30 presses against an end face that is of the outer wheel 32 and that faces the driving motor 50, and an end face that is of the ring fastening member 80 and that faces the driving motor 50 presses against the driving motor 50.

FIG. 6 is another schematic diagram of a lock apparatus in an electro-mechanical braking apparatus according to an embodiment of this application. In this embodiment of this application, the clutch 30 includes an inner wheel 31, an outer wheel 32, and a movable member 33.

In this embodiment of this application, the outer wheel 32 and the inner wheel 31 are sequentially spaced around the other end of the motor shaft of the braking motor 10. With reference to FIG. 5 and FIG. 6, the inner wheel 31 of the clutch 30 is sleeved on the other end of the motor shaft 10A of the braking motor 10, and the outer wheel 32 is sleeved on an outer circumferential surface of the inner wheel 31 and is movably connected to the inner wheel 31. In an embodiment, the inner wheel 31 includes the outer circumferential surface and an inner circumferential surface, and the outer wheel 32 includes an outer circumferential surface and an inner circumferential surface. The inner circumferential surface of the inner wheel 31 is in contact with an outer circumferential surface of the motor shaft of the braking motor 10, and the inner circumferential surface of the outer wheel 32 is sleeved on the outer circumferential surface of the inner wheel 31.

In this embodiment of this application, the inner wheel 31 is fastened to the other end of the motor shaft of the braking motor 10, so that the inner wheel 31 rotates with the motor shaft of the braking motor 10 or remains stationary. Regardless of whether the clutch 30 locks the other end of the motor shaft of the braking motor 10, the outer wheel 32 remains stationary relative to the inner wheel 31, and does not move along the axial direction of the braking motor 10 or rotate along a circumferential direction of the braking motor 10. It may be understood that if the inner wheel 31 can move relative to the outer wheel 32, the clutch 30 releases the motor shaft of the braking motor 10; or if the inner wheel 31 cannot move relative to the outer wheel 32, the clutch 30 locks the motor shaft of the braking motor 10.

In an embodiment, the housing member 60 includes a connection opening 61, a fastening part 62, and a housing part 63. As shown in FIG. 6, the connection opening 61 faces the braking motor 10, and the fastening part 62 surrounds the connection opening 61. Along the axial direction of the braking motor 10, an end face that is of the fastening part 62 and that faces the braking motor 10 is flush with an opening of the connection opening 61.

In this embodiment of this application, the connection opening 61 is configured to communicate the inside of the housing member 60 with the outside of the housing member 60. As shown in FIG. 6, the inner wheel 31 of the clutch 30 is fastened to the other end of the motor shaft of the braking motor 10 through the connection opening 61. An end that is of the outer wheel 32 and that faces the axial direction of the braking motor 10 presses against the housing of the braking motor 10 through the connection opening 61.

In this embodiment of this application, the housing member 60 is fastened to the housing of the braking motor 10 through the fastening part 62. A manner of fastening the fastening part 62 to the housing of the braking motor 10 includes welding, a threaded connection or clamping.

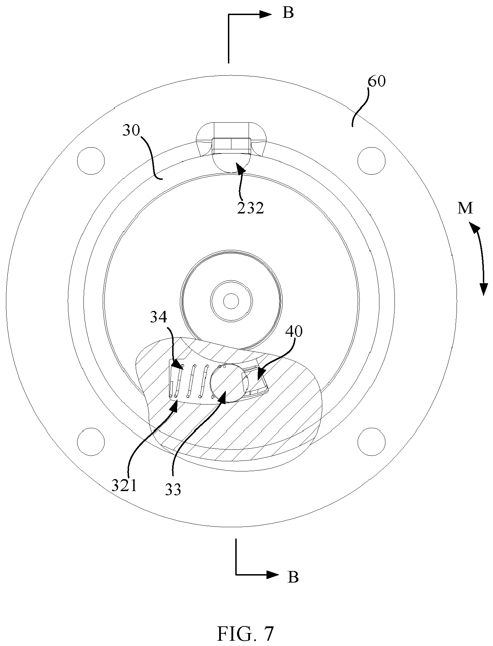

FIG. 7 is a schematic diagram of a lock apparatus in an electro-mechanical braking apparatus according to an embodiment of this application. As shown in FIG. 7, the fastening part 62 of the housing member 60 includes a plurality of fastening holes that are equally spaced and are disposed along the circumferential direction of the braking motor 10, where the fastening hole may be used for passing through by a fastening bolt that is in a threaded connection with the housing of the braking motor 10.

In this embodiment of this application, the housing part 60 is configured to accommodate the clutch 30, the axial moving member 40, and the driving motor 50. As shown in FIG. 6, along the axial direction of the braking motor 10, the clutch 30, the axial moving member 40, and the driving motor 50 are sequentially arranged inside the housing part 60. In an embodiment, the driving motor 50 includes a housing 50B. The housing 50B of the driving motor 50 is configured to accommodate a stator and a rotor of the driving motor 50, and the housing part 60 is configured to accommodate the housing of the driving motor 50. As shown in FIG. 6, the housing 50B of the driving motor 50 is fastened to an inner wall of the housing part 63, and limits relative rotation of the driving motor 50 and the housing member 60. In an embodiment, the housing part 60 is the housing of the driving motor 50. The housing part 60 is configured to accommodate the clutch 30, the axial moving member 40, and the stator and the rotor of the driving motor 50.

In an embodiment, the housing part 63 includes a step 64. The step 64 is flush with an end face that is of the driving motor 50 and that faces the clutch 30 or an end face that is of the housing 50B of the driving motor 50 and that faces the clutch 30. As shown in FIG. 6, the step 64 is configured to press against the end face that is of the ring fastening member 80 and that faces the driving motor 50. In an embodiment, the step 64 and the end face of the driving motor 50 simultaneously press against the end face that is of the ring fastening member 80 and that faces the driving motor 50.

In this embodiment of this application, the ring fastening member 80 cooperates with and is fastened to the outer wheel 32 of the clutch 30 through a positioning member 70. In this embodiment of this application, the positioning member 70 includes a positioning ring 71 and a positioning groove 72. As shown in FIG. 6, an end face that is of the ring fastening member 80 and that faces the outer wheel 32 includes the positioning ring 71, and an end face that is of the outer wheel 32 and that faces the ring fastening member 80 includes the positioning groove 72. In this embodiment of this application, locations of the positioning ring 71 and the positioning groove 321 may also be interchanged. In an embodiment, an end face that is of the outer wheel 32 and that faces the ring fastening member 80 includes the positioning ring 71, and an end face that is of the ring fastening member 80 and that faces the outer wheel 32 includes the positioning groove 321.

As shown in FIG. 6, the positioning ring 71 and the fastening member 80 are of an integrated structure. This helps improve connection strength between the positioning ring 71 and the fastening member 80, and can improve manufacturing efficiency of the positioning ring 71 and the fastening member 80. In an embodiment, the positioning ring 71 and the fastening member 80 may be of a split structure, and the positioning ring 71 is fastened to the fastening member 80.

In this embodiment of this application, in the lock apparatus 20, the positioning member 70 ensures that the driving motor 50 and the clutch 30 are coaxially disposed, and imposes a limitation that the outer wheel 32 cannot rotate relative to the housing member 60.

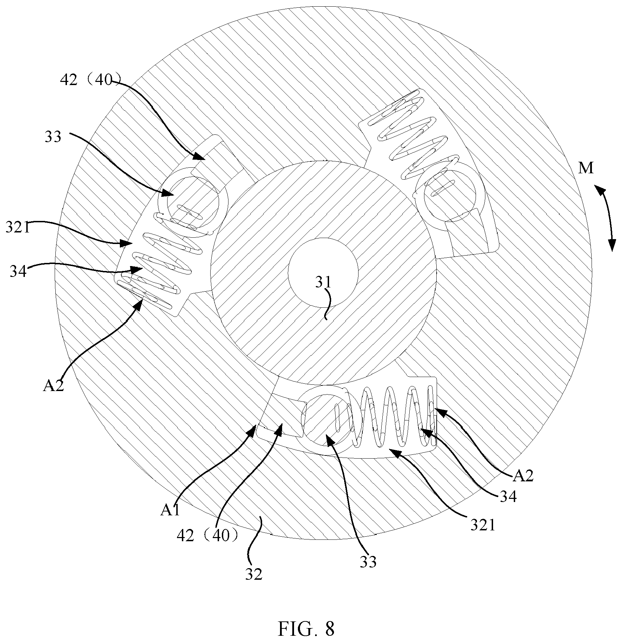

FIG. 8 is a schematic diagram of a cross section of B-B in the lock apparatus of the electro-mechanical braking apparatus shown in FIG. 7.

With reference to FIG. 7 and FIG. 8, the inner circumferential surface of the outer wheel 32 includes a groove 321. An opening of the groove 321 faces the outer circumferential surface of the inner wheel 31, and a groove depth of the groove 321 gradually decreases along the circumferential direction of the braking motor 10.

In this embodiment of this application, a minimum groove depth of the groove 321 is greater than a length of the movable member 33 along the radial direction of the braking motor 10, and a maximum groove depth of the groove 321 is greater than the length of the movable member 33 along the radial direction of the braking motor 10. In this embodiment of this application, a groove depth of the groove 321 is a distance between a groove bottom of the groove 321 and the opening of the groove 321 along the radial direction of the braking motor 10. The groove depth of the groove 321 may gradually decreases along the circumferential direction of the braking motor 10 in a linear or non-linear manner.

In this embodiment of this application, the groove bottom of the groove 321 may be a curved surface. This helps reduce a size of the groove 321 in the circumferential direction of the braking motor 10, so that a grooving area on the outer wheel 32 can be reduced, and then structural strength of the outer wheel 32 can be improved.

In this embodiment of this application, the movable member 33 is configured to move in the groove 321 along the circumferential direction of the braking motor 10. As shown in FIG. 7 or FIG. 8, the circumferential direction of the braking motor 10 is shown as an M direction. In this embodiment of this application, the movable member 33 includes a roll ball. As shown in FIG. 7, the movable member 33 is the roll ball, and the roll ball is configured to move in the groove 321 along a circumferential direction of the clutch 30. In an embodiment, the movable member 33 includes a cylindrical rolling element, and an axis of the rolling element is parallel to an axis of the clutch 30. In this embodiment of this application, the movable member 33 moves along the circumferential direction of the braking motor 10 to different locations of the groove 321, to limit or allow relative rotation of the inner wheel 31 and the outer wheel 32 in the clutch 30, so that the clutch locks or releases the other end of the motor shaft of the braking motor 10. As shown in FIG. 7 or FIG. 8, when the movable member 33 moves to an area with a small groove depth in the groove 321, the groove bottom of the groove 321 and the outer circumferential surface of the inner wheel 31 simultaneously press against the movable member 33 along the radial direction of the braking motor 10. In this case, the inner wheel 31 cannot rotate relative to the outer wheel 32, and then the clutch 30 locks the other end of the motor shaft of the braking motor 10. Correspondingly, when the movable member 33 moves to an area with a large groove depth in the groove 321, the movable member 33 may move relative to the groove bottom of the groove 321 and the outer circumferential surface of the inner wheel 31. In this case, the inner wheel 31 can rotate relative to the outer wheel 32, and then the clutch 30 releases the other end of the motor shaft of the braking motor 10.

Correspondingly, according to the electro-mechanical braking apparatus 100 provided in embodiments of this application, the movable member 33 of the clutch 30 moves along the circumferential direction of the braking motor 10, to limit or allow relative rotation of the outer wheel 32 and the inner wheel 31. This can reduce a quantity of parts of the electro-mechanical braking apparatus 100 to improve reliability of the electro-mechanical braking apparatus 100, and reduce a size of the electro-mechanical braking apparatus 100 along the radial direction of the braking motor 10.

In this embodiment of this application, a quantity of grooves 321 is the same as a quantity of movable members 33, and each groove 321 is configured to accommodate one movable member 33. There is at least one movable member 33. For example, a quantity of the movable members 33 may be one, two, three, four, or the like. It may be understood that a larger quantity of movable members 33 indicates a lower requirement on structural strength of a single movable member 33. This helps reduce costs of the movable member 33. In addition, when there are a plurality of movable members 33, the plurality of movable members 33 may be equally spaced and may be disposed along the circumferential direction of the braking motor 10. In this way, the inner wheel 31 and the outer wheel 32 can bear a balanced force, so that a service life of the clutch 30 can be improved.

As shown in FIG. 8, the clutch 30 includes three movable members 33, and the outer wheel 32 includes three grooves 321. Each groove 321 is configured to accommodate one movable member 33. The three grooves 321 are equally spaced and are disposed along the circumferential direction of the braking motor 10. In this embodiment of this application, that the three grooves 321 are equally spaced and are disposed along the circumferential direction of the braking motor 10 may be understood as that spacings between any two adjacent grooves 321 along the circumferential direction of the braking motor 10 are the same. A minimum groove depth end A1 of one of two adjacent grooves 321 is close to a maximum groove depth end A2 of the other groove 321 along the circumferential direction of the braking motor 10. The minimum groove depth end A1 is an end at which a minimum groove depth of the groove 321 is located, and the maximum groove depth end is an end at which a maximum groove depth of the groove 321 is located. In this way, the inner wheel 31 and the outer wheel 32 can bear a balanced force, and an external force borne by a single movable member 33 can be reduced, so that the service life of the clutch 30 can be improved.

In this embodiment of this application, a groove depth of each groove 321 gradually decreases along the circumferential direction of the braking motor 10, and each groove 321 has one minimum groove depth end A1 and one maximum groove depth end A2. In addition, for two adj acent grooves 321, a minimum groove depth end of one groove 321 is close to a maximum groove depth end of the other groove 321, so that a movable member 33 corresponding to each groove 321 moves in a direction the same as the circumferential direction of the braking motor 10. This simplifies a structure of the axial moving member 40, and ensures that the clutch 30 locks or releases the other end of the motor shaft of the braking motor 10. Therefore, when there are more than two grooves 321, the minimum groove depth end A1 of one of two adjacent grooves 321 is close to the maximum groove depth end A2 of the other groove 321.

In this embodiment of this application, the clutch 30 includes an elastic member 34. The elastic member 34 is configured to cooperate with the axial moving member 40 to drive the movable member 33 to move back and forth along the circumferential direction of the clutch 30.

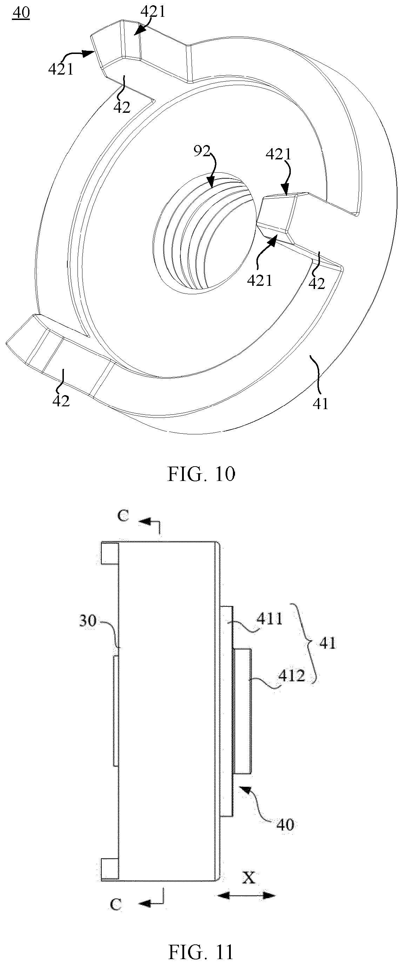

In this embodiment of this application, the elastic member 34 includes a spiral spring. As shown in FIG. 10, one end of the spring is configured to be connected to a groove end wall of the maximum groove depth end A2 of the groove 321, and the other end of the spring is configured to be connected to the movable member 33. In some embodiments, the elastic member 34 includes an elastic spring plate, one end of the spring plate is configured to be connected to a groove end wall of the maximum groove depth end A2 of the groove 321, and the other end of the spring plate is configured to be connected to the movable member 33.

In this embodiment of this application, one elastic member 34 is disposed in each groove 321 in the outer wheel 32 of the clutch 30. As shown in FIG. 8, there are three grooves 321. Correspondingly, there are three elastic members 34, and each elastic member 34 is disposed in one groove 321.

In this embodiment of this application, the elastic member 34 enables the movable member 33 to always tend to move along the circumferential direction of the clutch 30, and the axial moving member 40 cooperates with the elastic member 34, so that the movable member 33 can move back and forth in the groove 321 along the circumferential direction of the braking motor 10. In an embodiment, the axial moving member 40 moves toward the clutch 30 and drives the movable member 33 to move clockwise along the circumferential direction of the clutch 30 and squeeze the elastic member 34. When the axial moving member 40 moves away from the clutch 30, the elastic member 34 is reset and drives the movable member 33 to move counterclockwise along the circumferential direction of the clutch 30. In an embodiment, the axial moving member 40 moves toward the clutch 30 and drives the movable member 33 to move counterclockwise along the circumferential direction of the clutch 30 and squeeze the elastic member 34. When the axial moving member 40 moves away from the clutch 30, the elastic member 34 is reset and drives the movable member 33 to move clockwise along the circumferential direction of the clutch 30.

As shown in FIG. 8, the elastic member 34 enables the movable member 33 to always tend to move from the maximum groove depth end A2 of the groove 321 toward the minimum groove depth end A1 along the circumferential direction of the clutch 30. As shown in FIG. 7 or FIG. 10, the axial moving member 40 moves toward the clutch 30 and drives the movable member 33 to move clockwise along the circumferential direction of the clutch 30 to an area with a large groove depth in the groove 321 and squeeze the elastic member 34. When the axial moving member 40 moves away from the clutch 30, the elastic member 34 is reset and drives the movable member 33 to move counterclockwise along the circumferential direction of the clutch 30 to an area with a small groove depth in the groove 321.

Specifically, the axial moving member 40 moves toward the clutch 30, a part of the axial moving member 40 enters the groove 321 through a cooperation opening 322 and is in contact with the movable member 33. As a distance of moving toward the clutch 30 by the axial moving member 40 gradually increases, thrust of the axial moving member 40 acting on the movable member 33 is greater than an elastic force of the elastic member 34 acting on the movable member 33, and then the movable member 33 moves clockwise along the circumferential direction of the clutch 30. In this way, the movable member 33 moves from the minimum groove depth end of the groove 321 toward the maximum groove depth end along the circumferential direction of the clutch 30. Correspondingly, the movable member 33 does not simultaneously press against the inner wheel 31 and the groove bottom of the groove 321 in the outer wheel 32, so that the inner wheel 31 can rotate relative to the outer wheel 32.

Specifically, the axial moving member 40 moves away from the clutch 30. As the distance of moving away from the clutch 30 by the axial moving member 40 gradually increases, thrust of the axial moving member 40 acting on the movable member 33 is less than an elastic force of the elastic member 34 acting on the movable member 33, and then the elastic member 34 is reset and drives the movable member 33 to move counterclockwise along the circumferential direction of the clutch 30. In this way, the movable member 33 moves from the maximum groove depth end of the groove 321 toward the minimum groove depth end along the circumferential direction of the clutch 30, and the movable member 33 simultaneously presses against the inner wheel 31 and the groove bottom of the groove 321 in the outer wheel 32, to limit relative rotation of the inner wheel 31 and the outer wheel 32, so that the other end of the motor shaft of the braking motor 10 is locked. It may be understood that, the inner wheel 31 rotates relative to the outer wheel 32, and after the movable member 33 simultaneously presses against the inner wheel 31 and the groove bottom of the grooves 321 in the outer wheel 32, the movable member 33 prevents relative rotation of the inner wheel 31 and the outer wheel 32. Correspondingly, the inner wheel 31, the outer wheel 32, and the movable member 33 in the clutch 30 constitute a self-locking mechanical structure, so that the clutch 30 locks the motor shaft of the braking motor 10.

In another embodiment, the elastic member 34 may alternatively enable the movable member 33 to always tend to move from the minimum groove depth end A1 of the groove 321 toward the maximum groove depth end A2 along the circumferential direction of the clutch 30. The axial moving member 40 moves toward the clutch 30 and drives the movable member 33 to move counterclockwise along the circumferential direction of the clutch 30 to a location with a small groove depth in the groove 321 and squeeze the elastic member 34. When the axial moving member 40 moves away from the clutch 30, the elastic member 34 is reset and drives the movable member 33 to move clockwise along the circumferential direction of the clutch 30 to a location with a large groove depth in the groove 321.

In the clutch 30 in the electro-mechanical braking apparatus 100 provided in embodiments of this application, the axial moving member 40 cooperates with the elastic member 34, so that the movable member 33 moves back and forth in the groove 321 along the circumferential direction of the braking motor 10, to limit or allow relative rotation of the inner wheel 31 and the outer wheel 32 in the clutch 30. In this way, the clutch 30 can release or lock the motor shaft of the braking motor 10. Correspondingly, according to the electro-mechanical braking apparatus 100 provided in embodiments of this application, a quantity of parts required for parking braking can be reduced, and running time of the braking motor 10 and the driving motor 50 can be reduced, so that reliability of the electro-mechanical braking apparatus is improved.

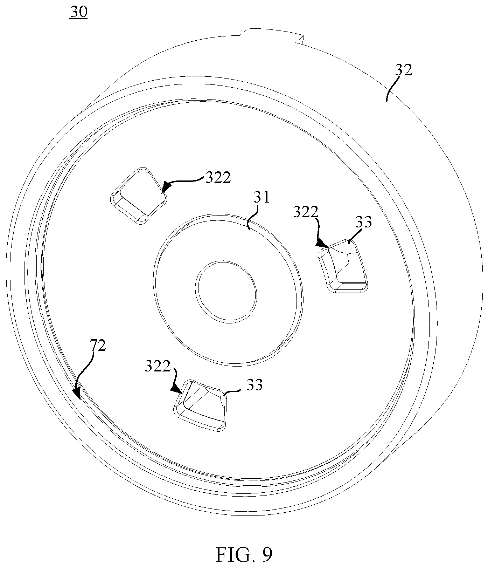

FIG. 9 is a schematic diagram of a clutch in an electro-mechanical braking apparatus according to an embodiment of this application. In this embodiment of this application, an end face that is of the outer wheel 32 in the clutch 30 and that faces the driving motor 50 includes the cooperation opening 322, and the cooperation opening 322 communicates with the groove 321 along an axial direction of the outer wheel 32. The axial moving member 40 drives the movable member 33 through the cooperation opening 322.

In this embodiment of this application, a quantity of the cooperation openings 322 is the same as a quantity of the grooves 321. As shown in FIG. 8, the outer wheel 32 includes three grooves 321. As shown in FIG. 9, the end face that is of the outer wheel 32 and that faces the driving motor 50 includes three cooperation openings 322. Each groove 321 corresponds to one cooperation opening 322. In this embodiment of this application, when there are a plurality of cooperation openings 322, structures of all the cooperation openings 322 may be the same or different. In this embodiment of this application, a shape of the cooperation opening 322 includes a rectangular opening, a circular opening, or an elliptical opening.

FIG. 10 is a schematic diagram of an axial moving member of a clutch in an electro-mechanical braking apparatus according to an embodiment of this application. In this embodiment of this application, the axial moving member 40 includes a transmission part 41 and a push part 42. The transmission part 41 is configured to: be in transmission connection with a motor shaft of the driving motor 50 and move along an axial direction of the driving motor 50 with rotation of the motor shaft of the driving motor 50. The push part 42 is configured to: receive a driving force of the transmission part 41, move along the axial direction of the driving motor 50, and drive the movable member 33. One end that is of the push part 42 and that faces the driving motor 50 is configured to receive the driving force of the transmission part 41, and the other end that is of the push part 42 and that faces the clutch 30 is configured to drive the movable member 33 to move along the circumferential direction of the clutch 30.

In this embodiment of this application, the cooperation opening 322 is configured to accommodate a part of the axial moving member 40. To be specific, when the axial moving member 40 moves along the axial direction of the braking motor 10 toward the clutch 30, the push part 42 of the axial moving member 40 may be inserted into the groove 321 through the cooperation opening 322. With reference to FIG. 9 and FIG. 10, the axial moving member 40 moves along the axial direction of the braking motor 10, and the push part 42 may push, through the cooperation opening 322, the movable member 33 to move along the circumferential direction of the clutch 30.

In this embodiment of this application, the push part 42 and the transmission part 41 may be of an integrated structure or a split structure. As shown in FIG. 10, the push part 42 and the transmission part 41 are of the integrated structure. In this way, connection strength between the push part 42 and the transmission part 41 can be improved, and production efficiency of the axial moving member 40 can be improved.

In this embodiment of this application, a quantity of push parts 42, a quantity of movable members 33, and a quantity of cooperation openings 322 are the same, and each push part 42 cooperates with the movable member 33 and the cooperation opening 322 of the outer wheel 32.

As shown in FIG. 10, there are three push parts 42. The three push parts 42 are spaced and are disposed along the circumferential direction of the clutch 30, and each push part 42 is configured to push one movable member 33 to move along the circumferential direction of the clutch 30. With reference to FIG. 9, FIG. 10, and the foregoing figures, each push part 42 may enter or leave the groove 321 through one cooperation opening 322, to push the movable member 33 to move along the circumferential direction of the clutch 30. The axial moving member 40 of such a structure may push the movable member 33 to move along the circumferential direction of the clutch 30 on a premise that the axial moving member 40 is in transmission connection with the motor shaft of the driving motor 50, so that the clutch 30 can lock or release the other end of the motor shaft of the braking motor 10.

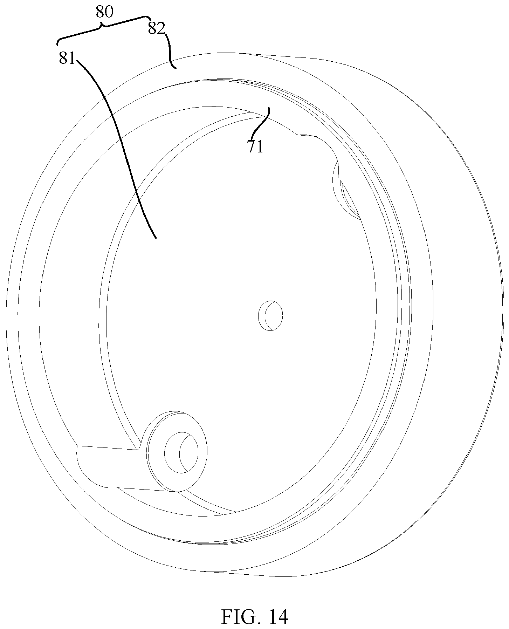

In this embodiment of this application, structures of the plurality of push parts 42 may be the same or different. As shown in FIG. 14, each pushing part 42 is a long-strip structure, and an extension direction of the push part 42 is parallel to an axial direction of the clutch 30. In an embodiment, structures of the plurality of push parts 42 are the same, and spacings between any two adjacent push parts 42 are the same. This can reduce difficulty of manufacturing the axial moving member 40, to help reduce production costs of the axial moving member 40.

In this embodiment of this application, one end that is of the push part 42 and that faces the outer wheel 32 includes a cooperation slope 421. A tilt direction of the cooperation slope 421 intersects the extension direction of the push part 42. Correspondingly, the push part 42 is in contact with an outer circumferential surface of the movable member 33 through the cooperation slope 421, so that the movable member 33 can move smoothly along the circumferential direction of the braking motor 10, to avoid impact of the movable member 33 on the inner wheel 31 and/or the outer wheel 32.

As shown in FIG. 10, two opposite side walls of each pushing part 42 respectively include one cooperation slope 421. The two cooperation slopes 421 are spaced and disposed along the circumferential direction of the clutch 30. The two cooperation slopes 421 are symmetrically disposed along an axis of symmetry parallel to the extension direction of the push part 42, and the axis of symmetry is located between the two cooperation slopes 421. In this way, an outer wall of any movable member 33 can be in contact with the cooperation slope 421 of the push part 42, so that in a process of assembling the axial moving member 40 and the clutch 30, it is unnecessary to consider that a specific push part 42 corresponds to a specific movable member 33. This can reduces difficulty of assembling the axial moving member 40.

In this embodiment of this application, the axial moving member 40 is in transmission connection with the motor shaft of the driving motor 50 through the transmission member 90. The transmission member 90 is configured to: move with rotation of the motor shaft of the driving motor 50 and drive the axial moving member 40 to move along the axial direction of the braking motor 10.

In this embodiment of this application, the transmission member 90 includes a transmission screw 91 and a threaded hole 92. The transmission part 41 includes the threaded hole 92. As shown in FIG. 10, the threaded hole 92 penetrates through the transmission part 41 of the axial moving member 40 along the axial direction of the braking motor 10. The transmission screw 91 is sleeved on the motor shaft of the driving motor 50 and is fastened to the motor shaft of the driving motor 50, and an external thread of the transmission screw 91 is engaged with an internal thread of the threaded hole 92. In this embodiment of this application, the transmission screw 91 of the transmission member 90 is sleeved on the motor shaft of the driving motor 50, and the transmission part 41 is sleeved on the transmission screw 91 through the threaded hole 92. In addition, an axis of the axial moving member 40 may coincide with that of the driving motor 50.

In this embodiment of this application, the transmission screw 91 rotates with the motor shaft of the driving motor 50, and drives, through the threaded hole 92, the transmission part 41 to move along the axial direction of the driving motor 50 or the axial direction of the braking motor 10, so that the push part 42 pushes the movable member 33 to move along the circumferential direction of the clutch 30.

FIG. 11 is a schematic diagram of an axial moving member of a clutch in an electro-mechanical braking apparatus according to an embodiment of this application. As shown in FIG. 11, the transmission part 41 includes a large ring part 411 and a small ring part 412 that are coaxially disposed. An outer diameter of the large ring part 411 is greater than an outer diameter of the small ring part 412. The large ring part 411 is fastened to the push part 42, and a middle part of the small ring part 412 includes the threaded hole 92. An axis of the threaded hole 92 coincides with an axis of the large ring part 411 and an axis of the small ring part 412. Correspondingly, on a premise that it is ensured that a length of engaging the transmission part 41 with the transmission screw 91 meets a requirement, a volume of the transmission part 41 may be reduced. This helps reduce a weight of the axial moving member 40.

In the clutch 30 in the electro-mechanical braking apparatus 100 provided in embodiments of this application, the transmission member 90 is connected to the axial moving member 40 and the driving motor 50. This can shorten a force transfer chain between the driving motor 50 and the axial moving member 40, and can simplify a structure of the electro-mechanical braking apparatus 100, to help improve reliability of the electro-mechanical braking apparatus 100.

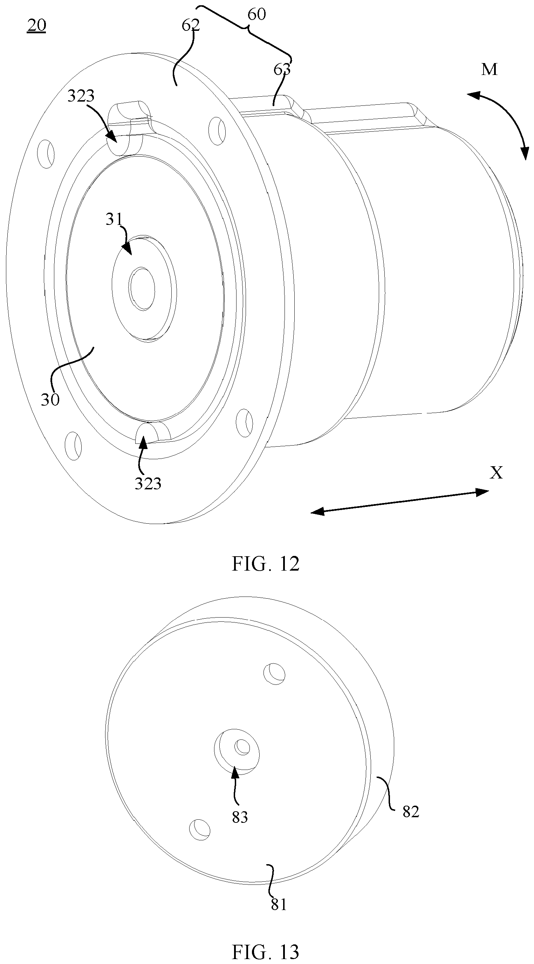

FIG. 12 is another schematic diagram of a lock apparatus in an electro-mechanical braking apparatus according to an embodiment of this application. In this embodiment of this application, the outer wheel 32 includes a clutch positioning part 323, and the braking motor 10 includes a clutch positioning groove 11. As shown in FIG. 12, the clutch positioning part 323 is a protrusion structure of an end face that is of the outer wheel 32 and that faces the braking motor 10 along the axial direction of the braking motor 10. The clutch positioning groove 11 is a groove structure that is of the braking motor 10 and that is away from the outer wheel 32 along the axial direction of the braking motor 10. As shown in FIG. 5, the clutch positioning groove 11 is a groove structure that is of the housing of the braking motor 10 and that is away from the outer wheel 32 along the axial direction of the braking motor 10. Correspondingly, the clutch positioning part 323 cooperates with the clutch positioning groove 11 to fasten relative locations of the outer wheel 32 and the braking motor 10. In an embodiment, the clutch positioning groove 11 is a groove structure that is of a stator iron core of the braking motor 10 and that is away from the outer wheel 32 along the axial direction of the braking motor 10.

In this embodiment of this application, disposing locations of the clutch positioning part 323 and the clutch positioning groove 11 may be interchanged. In an embodiment, the outer wheel 32 includes a clutch positioning groove 11, and the braking motor 10 includes a clutch positioning part 323. The clutch positioning part 323 is a protrusion structure that is of the braking motor 10 and that faces the outer wheel 32 along the axial direction of the braking motor 10, and the clutch positioning groove 11 is a groove structure that is of the outer wheel 32 and that is away from the braking motor 10 along the axial direction of the braking motor 10.

In this embodiment of this application, the clutch positioning part 323 includes a structure such as a rod-shaped structure, a block-shaped structure, or a plate-shaped structure. As shown in FIG. 6, the clutch positioning part 323 may be a block-shaped structure extending along the axial direction of the braking motor 10. A longitudinal section of the clutch positioning part 323 may include a clutch straight edge and a clutch arc edge. Two opposite ends of the clutch straight edge are respectively connected to two ends of the clutch arc edge, and the longitudinal section of the clutch positioning part 323 is perpendicular to the axial direction of the braking motor 10.

In this embodiment of this application, a quantity of clutch positioning parts 323 is one, two, three, four, or the like. There are two or more clutch positioning parts 323, and two adjacent clutch positioning parts 323 are equally spaced and are disposed along the circumferential direction of the clutch 30. As shown in FIG. 6, there are two clutch positioning parts 323, and the two clutch positioning parts 323 are equally spaced and are disposed along the circumferential direction of the clutch 30.

In this embodiment of this application, a structure of the clutch positioning groove 11 cooperates with a structure of the clutch positioning part 323. Specifically, a quantity of clutch positioning grooves 11 is the same as a quantity of clutch positioning parts 323, and each clutch positioning groove 11 corresponds to one clutch positioning part 323.

According to the electro-mechanical braking apparatus 100 provided in embodiments of this application, the clutch positioning part 323 is inserted into the clutch positioning groove 11, so that the clutch 30 is fastened to the braking motor 10. This can limit relative rotation of the outer wheel 32 relative to the braking motor 10, and can reduce difficulty of disposing coincidence between an axis of the outer wheel 32, the axis of the clutch 30, and the axis of the braking motor 10.

FIG. 13 is a schematic diagram of a ring fastening member of a lock apparatus in an electro-mechanical braking apparatus according to an embodiment of this application. FIG. 14 is another schematic diagram of a ring fastening member of a lock apparatus in an electro-mechanical braking apparatus according to an embodiment of this application. With reference to FIG. 13, FIG. 14, and the foregoing accompanying drawings, the ring fastening member 80 includes a fastening main part 81 of a hollow structure and a fastening connection part 82. The fastening main part 81 is spaced and sleeved on the motor shaft of the driving motor 50, and the fastening main part 81 is fastened to the housing 50B of the driving motor 50 and/or the housing part 63. Along a radial direction of the driving motor 50, an outer diameter of each of the fastening main part 81 and the fastening connection part 82 is greater than an outer diameter of the housing of the driving motor 50. Correspondingly, the fastening connection part 82 is fastened to the fastening main part 81, an end face that is of the fastening main part 81 and that faces the driving motor 50 may press against the step 64 of the housing part 63, and an end face that is of the fastening connection part 82 and that faces the clutch 30 is configured to press against the end face that is of the outer wheel 32 and that faces the driving motor 50.

With reference to FIG. 13 and the foregoing accompanying drawings, the end face that is of the fastening main part 81 and that faces the driving motor 50 may include a motor positioning groove 83, and an axis of the motor positioning groove 83 coincides with an axis of the driving motor 50. The housing 50B of the driving motor 50 may include a motor positioning part 51, and the motor positioning part 51 is configured to be inserted into the motor positioning groove 83. In an embodiment, the motor positioning part 51 is a ring structure and is sleeved on the motor shaft of the driving motor 50.

In descriptions of embodiments of this application, it should be noted that, unless otherwise clearly specified and limited, the terms "installation", "interconnection", and "connection" should be understood in a broad sense. For example, the "connection" may be a fixed connection, may be an indirect connection through an intermediate medium, or may be communication inside two elements or an interaction relationship between two elements. A person of ordinary skill in the art may understand specific meanings of the foregoing terms in embodiments of this application based on specific cases.

An apparatus or element in embodiments of this application or an implied apparatus or element needs to have a specific direction and be constructed and operated in a specific direction, and therefore cannot be construed as a limitation on embodiments of this application. In the descriptions of embodiments of this application, "a plurality of means two or more, unless otherwise precisely and specifically specified.

In the specification, claims, and accompanying drawings of embodiments of this application, the terms "first", "second", "third", "fourth", and the like (if existent) are intended to distinguish between similar objects, but do not necessarily indicate a specific order or sequence. It may be understood that the data used in such a way is interchangeable in appropriate circumstances, so that embodiments of this application described herein can be implemented in a sequence other than the sequence illustrated or described herein. In addition, the terms "include" and "have" and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The term "a plurality of in this specification means two or more. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects, and the character "/" in a formula indicates a "division" relationship between associated objects.

It may be understood that various numbers in embodiments of this application are merely used for differentiation for ease of description, and are not used to limit the scope of embodiments of this application.

## Claims

1. An electro-mechanical braking apparatus, comprising a braking motor and a lock apparatus, wherein one end of a motor shaft of the braking motor is configured to drive a brake, the brake is configured to brake a vehicle, the lock apparatus is configured to lock the braking motor through the other end of the motor shaft of the braking motor, and the lock apparatus comprises a clutch, an axial moving member, and a driving motor, wherein
the clutch is sleeved on the other end of the motor shaft of the braking motor;
the axial moving member is configured to: move along an axial direction of the braking motor relative to the clutch and control the clutch to lock or release the other end of the motor shaft of the braking motor; and
the driving motor is configured to drive the axial moving member to move away from or toward the clutch.

2. The electro-mechanical braking apparatus according to claim 1, wherein the clutch comprises an inner wheel, an outer wheel, and a movable member, wherein
the outer wheel and the inner wheel are sequentially spaced around the other end of the motor shaft of the braking motor, the inner wheel is configured to be fastened to the other end of the motor shaft of the braking motor, an inner circumferential surface of the outer wheel comprises a groove, an opening of the groove faces an outer circumferential surface of the inner wheel, and a groove depth of the groove gradually decreases along a circumferential direction of the braking motor; and
the movable member is configured to move in the groove along the circumferential direction of the braking motor.

3. The electro-mechanical braking apparatus according to claim 2, wherein the clutch comprises three movable members, the outer wheel comprises three grooves, and each groove is configured to accommodate one of the movable members, wherein
the three grooves are equally spaced and are disposed along the circumferential direction of the braking motor; and
a minimum groove depth end of one of two adjacent grooves is close to a maximum groove depth end of the other groove along the circumferential direction of the braking motor.

4. The electro-mechanical braking apparatus according to claim 3, wherein a minimum groove depth of each groove is greater than a length of the movable member along a radial direction of the braking motor, and a maximum groove depth of each groove is greater than the length of the movable member along the radial direction of the braking motor.

5. The electro-mechanical braking apparatus according to claim 2, wherein an end face that is of the outer wheel and that faces the driving motor comprises a cooperation opening, the cooperation opening communicates with the groove along an axial direction of the outer wheel, and the axial moving member passes through the cooperation opening to drive the movable member.

6. The electro-mechanical braking apparatus according to claim 2, wherein the clutch comprises an elastic member, and the elastic member is configured to cooperate with the axial moving member to drive the movable member to move back and forth along a circumferential direction of the clutch, wherein
the axial moving member moves toward the clutch and drives the movable member to move clockwise along the circumferential direction of the clutch, and when the axial moving member moves away from the clutch, the elastic member is configured to drive the movable member to move counterclockwise along the circumferential direction of the clutch; or
the axial moving member moves toward the clutch and drives the movable member to move counterclockwise along the circumferential direction of the clutch, and when the axial moving member moves away from the clutch, the elastic member is configured to drive the movable member to move clockwise along the circumferential direction of the clutch.

7. The electro-mechanical braking apparatus according to claim 2, wherein the axial moving member comprises a transmission part and a push part, wherein
the transmission part is configured to: be in transmission connection with a motor shaft of the driving motor and move along an axial direction of the driving motor with rotation of the motor shaft of the driving motor; and
the push part is configured to: receive a driving force of the push part, move along the axial direction of the driving motor, and drive the movable member.

8. The electro-mechanical braking apparatus according to claim 7, wherein one end that is of the push part and that faces the outer wheel comprises a cooperation slope, and a tilt direction of the cooperation slope intersects the axial direction of the driving motor.

9. The electro-mechanical braking apparatus according to claim 2, wherein the outer wheel comprises a clutch positioning part, the braking motor comprises a clutch positioning groove, the clutch positioning part is a protrusion structure that is of the outer wheel and that faces the braking motor along the axial direction of the braking motor, the clutch positioning groove is a groove structure that is of the braking motor and that is away from the outer wheel along the axial direction of the braking motor, and the clutch positioning part cooperates with the clutch positioning groove to fasten relative locations of the outer wheel and the braking motor; or
the outer wheel comprises a clutch positioning groove, the braking motor comprises a clutch positioning part, the clutch positioning groove is a groove structure that is of the outer wheel and that is away from the braking motor along the axial direction of the braking motor, the clutch positioning part is of a protrusion structure that is of the braking motor and that faces the outer wheel along the axial direction of the braking motor, and the clutch positioning part cooperates with the clutch positioning groove to fasten relative locations of the outer wheel and the braking motor.

10. The electro-mechanical braking apparatus according to claim 9, wherein the lock apparatus comprises a housing member, the housing member is configured to: be fastened to the braking motor and accommodate the clutch, the axial moving member, and the driving motor, and the housing member comprises a connection opening, wherein
the connection opening is configured to communicate the inside of the housing member with the outside of the housing member, the connection opening faces the braking motor, the inner wheel is fastened to the other end of the motor shaft of the braking motor through the connection opening, and one end that is of the outer wheel and that faces the braking motor presses against a housing of the braking motor through the connection opening.

11. The electro-mechanical braking apparatus according to claim 10, wherein the lock apparatus comprises a ring fastening member, the ring fastening member is disposed inside the housing member and arranged between the clutch and the driving motor, the ring fastening member is fastened to the outer wheel through a positioning member, and the positioning member comprises a positioning ring and a positioning groove, wherein
an end face that is of the ring fastening member and that faces the outer wheel comprises the positioning ring, and an end face that is of the outer wheel and that faces the ring fastening member comprises the positioning groove; or
an end face that is of the ring fastening member and that faces the outer wheel comprises the positioning groove, and an end face that is of the outer wheel and that faces the ring fastening member comprises the positioning ring.

12. The electro-mechanical braking apparatus according to any one of claims 1 to 11, wherein the axial moving member is in transmission connection with the motor shaft of the driving motor through a transmission member, and the transmission member is configured to: move with rotation of the motor shaft of the driving motor and drive the axial moving member to move along the axial direction of the braking motor.

13. The electro-mechanical braking apparatus according to claim 12, wherein the transmission member comprises a transmission screw and a threaded hole, the threaded hole penetrates through the transmission part of the axial moving member along the axial direction of the braking motor, the transmission screw is sleeved on the motor shaft of the driving motor and is fastened to the motor shaft of the driving motor, the axial moving member is sleeved on the transmission screw through the threaded hole, and an external thread of the transmission screw is engaged with an internal thread of the threaded hole.

14. The electro-mechanical braking apparatus according to claim 1, wherein along the axial direction of the braking motor, the axial moving member is arranged between the clutch and the driving motor, and axes of the braking motor, the axial moving member, the clutch, and the driving motor coincide.

15. A vehicle, comprising a wheel and the electro-mechanical braking apparatus according to any one of claims 1 to 14, wherein the electro-mechanical braking apparatus is configured to brake the wheel.
